# EUROPEAN PATENT APPLICATION

(11) **EP 4 624 247 A1**
(43) Date of publication of application: **01.10.2025**
(21) Application number: 25167165.7
(22) Date of filing: 28.03.2025
(51) Int. Cl.: B60N 2/50, B60N 2/52, B60N 2/54

(54) **ADJUSTABLE HEIGHT CUSHIONED SEAT**

(30) Priority: 28.03.2024 IT 202400006967
(71) Applicant: F.I.S.A - Fabbrica Italiana Sedili Autoferroviari - SRL, 33010 Rivoli di Osoppo (Udine) (IT)
(72) Inventor: De Simon, Stefano, 33100 Udine (IT); De Simon, Davide, 33100 Udine (IT)
(74) Representative: Petraz, Gilberto Luigi

(57) **Abstract**

Adjustable height cushioned seat (10) comprising a base (11), a seat bottom (12), a vibration damping unit (13) and a height adjustment unit (14) which are housed in said base (11) and operationally connected to said seat bottom (12).

## Description

### FIELD OF THE INVENTION

The present invention concerns an adjustable height cushioned seat that can be used in any application that is characterized by vibrations induced on the seat, and in which there is a need to height adjust the seat itself so as to guarantee maximum operation and improved comfort for the user. This seat find particular application in driving positions of bus, rail and tram vehicles, ships, motor vehicles in general, agricultural machinery and suchlike.

### BACKGROUND OF THE INVENTION

It is known that the driving seat for drivers of bus, rail and tram vehicles, ships, motor vehicles, agricultural machinery and suchlike have to have certain characteristics of comfort, reliability and ergonomic.

In the railway sector, the seat normally comprises a seat bottom and a backrest, as well as a series of devices for adjusting the driving position for all possible percentiles of the driver's height; in this way, the driver can find an optimal and ergonomic seating position that allows them easy access to the controls and general comfort in carrying out any tasks, while guaranteeing the visibility conditions set by current regulations.

The seat bottom is normally mounted on a rotatable, height-adjustable base attached to the floor of the operating cab. For cases in which the vibratory stresses of the train or the applications require it, a springing or suspension system connected to the seat bottom and able to absorb or dampen the vibrations before they reach the seat bottom is disposed inside the base.

The type of springing or suspension is normally offered by two possible solutions: one of a mechanical type (spring and damper), another of a pneumatic type (air spring and damper).

The height adjustment can be achieved through various mechanical, electrical, or pneumatic solutions.

One disadvantage of traditional seats is that the pneumatic or electro-pneumatic suspension system, in addition to having a complex design, requires constant maintenance.

Another disadvantage of traditional seats is the height adjustment, whereby it is provided that the user, in order to proceed with the adjustment, momentarily lifts their body from the seat, possibly resting their feet on the platform below. This can be uncomfortable because it requires the user to perform disjointed movements. Moreover, the object that performs the seat-lifting function is inherently inadequate to guarantee reliability and operation over the course of the train's life, without undergoing maintenance or being replaced several times during operation.

Another disadvantage of traditional seats with mechanical springing lies in the fact that the suspension works correctly only if the spring's preload is adjusted according to each user's weight. This maneuver, in addition to lengthening the time necessary to prepare to drive, if not carried out, leads to serious imbalances in the correct damping of vibrations and possible damage to the system, causing breakages thereof and therefore machine stops and early maintenance.

In the motor vehicle and agricultural machinery sector, as well as in the railway sector, seats can be cushioned and height-adjusted pneumatically. An air spring associated with the seat bottom at the lower part can be inflated or deflated to increase or decrease the seat's height, and also to counteract the vibrations induced during the vehicle's travel.

A disadvantage of these seats is that the height adjustment impairs the ability of the system to effectively cushion the vibrations. In fact, since the same air spring fulfils both the vertical adjustment and also the springing functions, when air is blown inside it to raise the driving position, this also causes an increase in its stiffness, causing a limited or unsuitable response to the vibrations themselves.

This disadvantage is amplified by the fact that the initial preload condition achieved on the basis of the user's weight can be subsequently disregarded once the seat height has also been adjusted, so that the pneumatic cushioning causes a different response depending on the user's weight and build. This makes the seat not very versatile, especially if the users are often different, as may be the case with the operation of a train in which several drivers alternate daily. This most often results in a set of possible configurations that cannot be controlled and limited, preventing visibility from always being guaranteed, regardless of the vertical stresses coming from the track.

Another disadvantage of current pneumatic systems lies in remedying the stiffer behavior of the air spring caused by the height adjustment, giving the damping system variable characteristic, thus allowing the driver to choose two or more adjustments. This practice may appear as an improvement in comfort; however, while it acts directly on the fundamental parameters of the suspension, it acts on the wrong one (instead of on the stiffness), adding an additional variable to the system and therefore increasing its possible operating configurations; in such a complex case, this results in the increase of incorrect or unsuitable configurations, with possible impacts on health.

Solutions that have tried to resolve the problems described above are known in the state of the art, such as for example known from EP 3.939.828 and US 6.340.152.

EP'828 describes a seat bottom associated with a spring system comprising a spring element and an adjustment unit, a height sensor for detecting the height of the seat bottom with respect to a fixed reference, and a control unit for modifying the preload force of the spring element as a function of the signal detected by the height sensor. There is also an adaptive shock absorber configured to vary the stiffness of the cushioning element based on the signals coming from the control unit.

US'152 also describes a vibration cushioning module associated with a seat bottom. In this solution, the seat bottom is associated with a pneumatic piston equipped with a rod that slides inside a cylinder. There is also a clamping member disposed inside the cylinder and cooperating with the rod so as to clamp it in a certain adjustment position, or release it. However, in US'152 the function of the clamping member is to make the suspension system (spring+damper) independent from the height adjustment piston during the height adjustment, because they are kinematically coupled during operation by a gripper that is clamped after the height adjustment step. There is therefore the need to perfect an adjustable height cushioned seat that can overcome at least one of the disadvantages of the state of the art.

To do this, it is necessary to resolve the technical problem of simplifying current adjustable height cushioned seats that are installed on some types of trains, both in order to increase their vibration-absorbing capacity and also to improve the adjustability of the seat's height.

One purpose of the present invention is to provide an adjustable height cushioned seat that is simple, has an excellent vibration-absorbing capacity and easy adjustment of the seat's height.

Another purpose of the present invention is to provide an adjustable height cushioned seat that is particularly suited to the comfort, ergonomic and functionality requirements necessary for a train driving position.

Another purpose of the present invention is to provide an adjustable height cushioned seat whose operation is independent of the user's weight.

Another purpose of the present invention is to provide an adjustable height cushioned seat in which the preload, and therefore the springing position, can be adjusted automatically without requiring specific manual calibrations.

The Applicant has devised, tested and embodied the present invention to overcome the shortcomings of the state of the art and to obtain these and other purposes and advantages.

### SUMMARY OF THE INVENTION

The present invention is set forth and characterized in the independent claim. The dependent claims describe other characteristics of the present invention or variants to the main inventive idea.

In accordance with the above purposes and to resolve the technical problem described above in a new and original way, also achieving considerable advantages compared to the state of the prior art, an adjustable height cushioned seat according to the present invention comprises a base, a seat bottom, a vibration damping unit and a height adjustment unit which are housed in the base and operationally connected to the seat bottom.

In accordance with one aspect of the present invention, the seat comprises a pneumatic feed unit fluidically connected in an independent manner to the vibration damping unit and to the height adjustment unit.

Doing so achieves at least a decoupling of the normal cushioning and height adjustment functions, which in pneumatic seats are usually performed by a single unit. Furthermore, a seat with this kind of drive does not provide any electrical devices, simplifying its operation and limiting any maintenance.

In accordance with another aspect of the present invention, the vibration damping unit comprises an air spring and, in parallel, a damper.

In accordance with another aspect of the present invention, the vibration damping unit also comprises a self-levelling valve connected to an air inlet-outlet flange of the air spring and operative to allow an introduction or an extraction of air as a function of the weight of a user occupying the seat bottom, in order to reach a certain work position.

In accordance with another aspect of the present invention, the height adjustment unit comprises a pneumatic piston.

In accordance with another aspect of the present invention, the pneumatic piston and the air spring, together with the damper, are installed in series forming an integral assembly.

In accordance with another aspect of the present invention, the air spring is attached to a base plate of the base, and the pneumatic piston is attached to an upper plate of the air spring.

In accordance with another aspect of the present invention, the pneumatic piston comprises a cylinder inside which a rod is mobile along a vertical axis of adjustment, the rod being connected to the seat bottom and able to be moved by the compressed air that is introduced into the cylinder, and a clamping member disposed inside the cylinder and cooperating with the rod in order to clamp it in a certain adjustment position or to release it.

In accordance with another aspect of the present invention, the clamping member can be a pneumatic gripper.

In accordance with another aspect of the present invention, the vibration damping unit comprises a self-levelling valve connected to an air inlet-outlet flange of the air spring and operative to allow an introduction or an extraction of air as a function of the weight of a user occupying the seat bottom, in order to reach a certain work position.

In accordance with another aspect of the present invention, the vibration damping unit comprises a cam associated in cooperation with the valve and responsive to the vibrations induced on the base to allow the introduction or extraction of air into or from the air spring.

In accordance with another aspect of the present invention, the valve is provided with two buttons for loading air and discharging air, respectively, and the cam is conformed in such a way that a relative movement between cam and valve determines the pressing of one of the buttons or none of them.

In accordance with another aspect of the present invention, the pneumatic feed unit comprises a collector to which a plurality of distinct and independent flexible tubes are connected, communicating with the air spring and with the pneumatic piston, respectively.

### DESCRIPTION OF THE DRAWINGS

These and other aspects, characteristics and advantages of the present invention will become apparent from the following description of an embodiment, given as a non-restrictive example with reference to the attached drawings wherein:
- fig. 1 is a separate component view of an adjustable height cushioned seat, according to the present invention;
- fig. 2 is a three-dimensional view of the assembly formed by the vibration damping unit and the height adjustment unit;
- fig. 3 is a lateral view of fig. 2;
- fig. 4 is a longitudinal section view of the assembly of figs. 2-3 housed in the seat's base, also shown in a section view;
- figs. 5-7 show the operating states of the self-levelling valve - closed (fig. 5), open loading (fig. 6) and open discharging (fig. 7), respectively.

We must clarify that the phraseology and terminology used in the present description, as well as the figures in the attached drawings also in relation as to how described, have the sole function of better illustrating and explaining the present invention, their purpose being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF AN EMBODIMENT OF THE PRESENT INVENTION

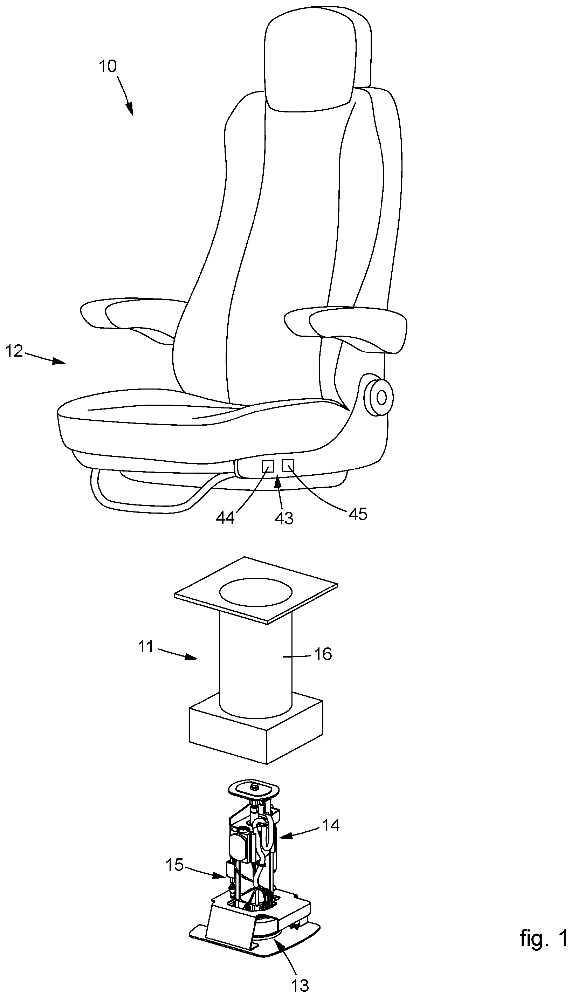

With reference to fig. 1, a seat 10 according to the present invention is of the adjustable height cushioned type and comprises a base 11 and a seat bottom 12, a vibration damping unit 13 and a distinct height adjustment unit 14 which are housed in the base 11 and operationally connected to the seat bottom 12.

According to the invention, the seat 10 is fed exclusively with compressed air through a pneumatic feed unit 15 fluidically connected in an independent manner to the vibration damping unit 13 and to the height adjustment unit 14.

The base 11 comprises an essentially cylindrical body 16 inside which the vibration damping unit 13 and the height adjustment unit 14 are housed.

Inside the base 11 there is also installed the pneumatic feed unit 15, which can comprise a collector 17 connected to a compressed air source device and to which a plurality of flexible tubes or ducts 19 are connected so as to distribute the compressed air to the various user devices of the seat 10.

The compressed air source device can be the pneumatic system of the means of transport on which the seat 10 is installed, for example a train, or it can be a compressor "integrated" in the seat 10.

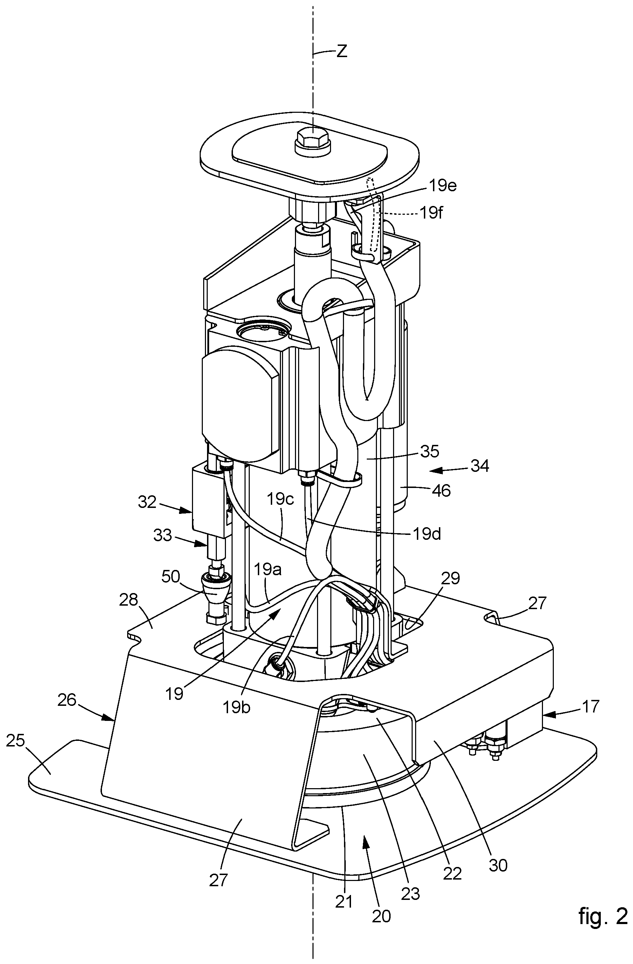

With reference to fig. 2, the vibration damping unit 13 comprises a suspension which in this specific case is an air or pneumatic spring 20.

The air spring 20 comprises a lower plate 21, an upper plate 22 and a flexible bellows 23 attached between the two lower and upper plates 21 and 22 and defining with them a closed chamber 24, inflatable to provide an elastic or cushioning action, see figs. 2-4.

The flexible bellows 23 is generally made of materials such as rubber or durable plastic, and is designed to expand and contract in response to air pressure.

The air spring 20 is attached with the lower plate 21 on a flat base plate 25 to which the body of the base 11 is secured. The base plate 25 constitutes the installation interface of the seat 10, for example for attachment to the floor of a train's operating cab.

At the upper part of the base plate 25 there is attached a "bridge" bracket 26, to which the collector 17 is attached.

The bracket 26 has two inclined and opposing attachment feet 27, and an upper flat wall 28 provided with a central aperture 29. The bracket 26 also has a lateral wall 30 that protrudes L-shaped from the upper flat wall 28 and on which the collector 17 is attached.

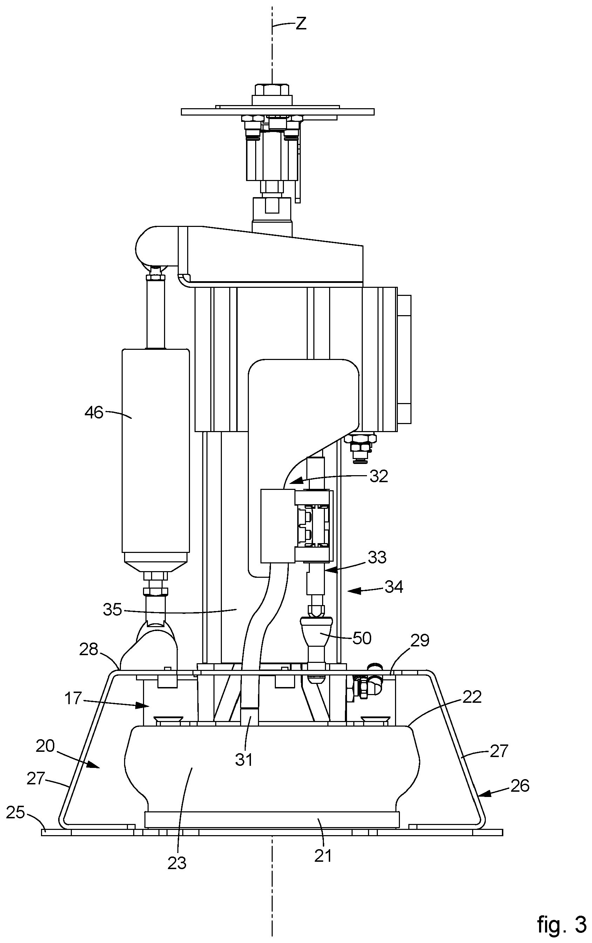

The air spring 20 is provided with an air inlet-outlet flange 31 (fig. 3) connected to the pneumatic feed unit 15 by means of a so-called self-levelling valve 32. In particular, a dedicated tube or duct can be provided that connects the valve 32 with the air inlet-outlet flange 31.

The air inlet-outlet flange 31 can preferably be provided on the upper plate 22.

The self-levelling valve 32 is fluidically connected to the collector 17 through a dedicated tube or duct 19a.

The self-levelling valve 32 cooperates with a cam 33 responsive to the vertical displacements of the seat 10, so as to allow the introduction or extraction of compressed air into or from the air spring 20.

The self-levelling valve 32 is pneumatically actuated to allow a selective introduction or extraction of air into/from the closed chamber 24 of the air spring 20, as a function of the weight of a user occupying the seat bottom 12, so that the air spring 20 reaches a certain work position.

The system is designed so that the balance height of the springing is always the same, or within a permitted range. This height defines the work position around which the suspension, that is, the air spring 20, oscillates.

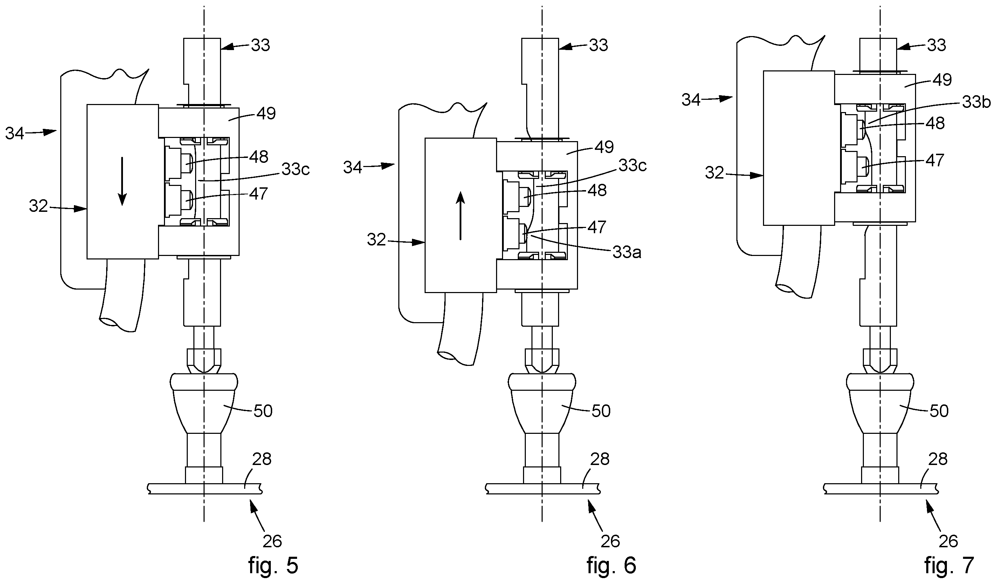

With reference to figs. 5-7, the self-levelling valve 32 has three possible operating states: open loading (fig. 6), open discharging (fig. 7), which can be enabled by two buttons 47, 48, air loading and discharging, respectively, which are attached thereon, or closed, when both air loading and discharging buttons 47, 48 are not activated (fig. 5).

The operating state is defined by the height of the air spring 20 which determines a relative vertical movement between the cam 33 and the self-levelling valve 32 so that one or none of the air loading or discharging buttons 47, 48 is pressed.

The profile of the cam 33 is shaped so as to determine the work position of the air spring 20, determining the operating state of the self-levelling valve 32 by means of physical interference with the air loading or discharging buttons 47, 48.

When excessive air is blown into the air spring 20, the relative position between the cam 33 and the self-levelling valve 32 changes, and the air discharging button 48 is activated so that the air is evacuated from the air spring 20 (fig. 7). When, on the contrary, the pressure of the air spring 20 is lower than that necessary to reach the work position, the relative position between the cam 33 and the self-levelling valve 32 causes the air loading button 47 to be activated, leading to the increase in the internal pressure of the chamber 24 and therefore the raising of the work height (fig. 6), until the relative position between the cam 33 and the self-levelling valve 32 is brought to a neutral zone in which the valve 32 is closed and therefore the suspension self-levelled (fig. 5).

This balance is not altered by adjusting the height of the seat, and is defined regardless of the weight of the driver, allowing to guarantee compliance with the operating cab's design parameters, such as visibility.

According to possible embodiments, the self-levelling valve 32 can comprise a pressure control device, such as a pressure regulator, to guarantee that air is delivered at the desired pressure into the closed chamber 24 of the air spring 20.

According to some embodiments, the cam 33 has an elongated shape with a shaped recess that develops longitudinally, defining two protruding engagement positions 33a, 33b for the interference with the air loading or discharging buttons 47, 48, and a neutral central zone 33c always spaced apart from the air loading and discharging buttons 47, 48.

The cam 33 is relatively slidable in a guide cage 49 attached to the self-levelling valve 32.

In the neutral central zone 33c, called "non-intervention" zone, the system can freely oscillate vertically, without affecting the stiffness characteristic. This neutral central zone 33c can be of a variable length depending on the design needs, thereby shortening or lengthening the stroke of the suspension.

The seat bottom 12, which is of the type rotatable with respect to a vertical axis of adjustment Z, is adjustable in height by means of the height adjustment unit 14.

The height adjustment unit 14 comprises a pneumatic piston 34 which uses compressed air to generate a linear movement of the seat bottom 12.

The pneumatic piston 34 comprises a cylinder 35 inside which a rod 36 is mobile along the vertical axis of adjustment Z, the rod 36 being connected to the seat bottom 12 and able to be moved by the compressed air that is introduced into the cylinder 35.

The cylinder 35 is fluidically connected to the collector 17 by means of a dedicated tube or duct 19b.

The rod 36 is also connected to the seat bottom 12, so that the seat bottom 12 is rotatable with respect to the rod 36.

The air spring 20 and damper 46 define a mechanical system that works in parallel and are installed with the pneumatic piston 34 in series forming an integral assembly. In particular, the pneumatic piston 34 is attached to the upper plate 22 of the air spring 20.

According to some embodiments, the self-levelling valve 32 can be attached to the lateral wall of the cylinder 35, for example by means of a metal bracket or plate. Moreover, a lower end of the cam 33 is constrained to a support element 50 attached to the bracket 26 (figs. 2, 3, 5-7). In this case, the cam 33 is fixed while the springing caused by the air spring 20 brings the pneumatic piston 34, and with it the self-levelling valve 32 together with the guide cage 49, into a vertical movement.

A person of skill in the art will understand that additional alternative configurations are possible. For example, the cam 33 can be attached to the air spring 20 and therefore mobile as a function of its filling level, while the self-levelling valve 32, together with the guide cage 49, can be fixed, for example to the bracket 26 or to other fixed elements of the seat 10.

In both cases, the relative movement between cam 33 and self-levelling valve 32 occurs.

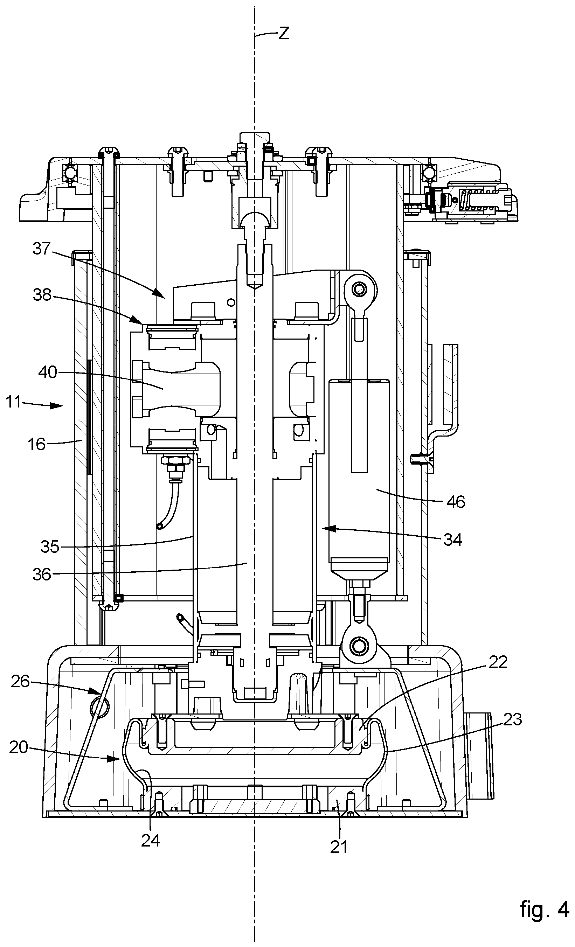

With reference to fig. 4, the pneumatic piston 34 also comprises a clamping member 37 disposed inside the cylinder 35 and operationally cooperating with the rod 36 to clamp it in a certain adjustment position along the vertical axis of adjustment Z, or to release it so that it can be lowered or raised.

The clamping member 37 can be a pneumatic gripper 38 comprising a pneumatic actuator configured to convert the energy of the compressed air into mechanical movement, and a gripping device 40, for example formed by two opposing jaws, able to be operationally commanded to clamp the rod 36.

The pneumatic gripper 38 is normally clamped. The introduction of air through two dedicated tubes or ducts 19c, 19d (fig. 2), each tube being connected to a respective jaw, causes the jaws to open and the rod 36 to be free to be moved along the vertical axis of adjustment Z.

Additional components of the clamping member 37 can be a compressed air control valve and a position sensor or switch.

With reference to fig. 1, the seat 10 comprises, for example associated with one side of the seat bottom 12, a push-button panel 43 equipped with two distinct manually activated pneumatic buttons 44, 45 that can be pressed by the user to adjust the height of the seat bottom 12. When the button 44, 45 is pressed, the compressed air is released or compressed inside the cylinder 35, allowing the user to raise or lower the seat according to their preferences.

The push-button panel 43 is fluidically connected to the collector 17 by means of two dedicated tubes or ducts 19e, 19f (fig. 2).

The seat 10 also comprises a damper or shock absorber 46 attached to the bracket 26 and to the pneumatic piston 34 in such a way as to attenuate the stresses induced by the air spring 20, preventing resonances or divergent behaviors, and improving the seating experience for the user.

According to some embodiments, the shock absorber 46 can be of the pneumatic, gas, or oil type.

According to possible embodiments, the shock absorber 46 can be with variable adjustment. The air spring 20 can also be with variable adjustment. The adjustment parameter can be stiffness, for example.

In this case, the seat 10 can comprise at least one sensor configured to measure the incoming vibrations, and a controller capable of receiving a signal sent by the sensor, processing it and transmitting a command signal to adjust the shock absorber 46 and/or the air spring 20.

In possible implementations, the adaptive adjustment of the air spring 20 and/or of the shock absorber 46 can be performed on the basis of pre-acquired data on the type of track and/or on the user's profile (height, weight and other parameters).

It is clear that modifications and/or additions of parts may be made to the seat 10 as described heretofore, without thereby departing from the field and scope of the present invention, as defined by the claims.

It is also clear that, although the present invention has been described with reference to some specific examples, a person of skill in the art will be able to achieve other equivalent forms of an adjustable height cushioned seat, having the characteristics as set forth in the claims and hence all coming within the field of protection defined thereby.

In the following claims, the sole purpose of the references in brackets is to facilitate their reading and they must not be considered as restrictive factors with regard to the field of protection defined by the claims.

## Claims

1. Adjustable height cushioned seat (10) comprising a base (11), a seat bottom (12), a vibration damping unit (13) and a height adjustment unit (14) which are housed in said base (11) and operationally connected to said seat bottom (12), said seat (10) comprising a pneumatic feed unit (15) fluidically connected in an independent manner to said vibration damping unit (13) and to said height adjustment unit (14), wherein
said vibration damping unit (13) comprises an air spring (20) and, in parallel, a damper (46), **and wherein** said height adjustment unit (14) comprises a pneumatic piston (34), **characterized in that** said vibration damping unit (13) comprises a self-levelling valve (32) connected to an air inlet-outlet flange (31) of said air spring (20) and operative to allow an introduction or an extraction of compressed air as a function of the weight of a user occupying said seat bottom (12), in order to reach a certain work position.

2. Seat (10) as in claim 1, **characterized in that** said pneumatic piston (34) and said air spring (20), together with said damper (46), are installed in series forming an integral assembly.

3. Seat (10) as in claim 2, **characterized in that** said air spring (20) is attached to a base plate (25) of said base (11) and said pneumatic piston (34) is attached to an upper plate (22) of said air spring (20).

4. Seat (10) as in any claim hereinbefore, **characterized in that** said pneumatic piston (34) comprises a cylinder (35) inside which a rod (36) is mobile along a vertical axis of adjustment (Z), said rod (36) being connected to said seat bottom (12) and able to be moved by the compressed air that is introduced into said cylinder (35), and a clamping member (37) disposed inside said cylinder (35) and cooperating with said rod (36) in order to clamp it in a certain adjustment position or to release it.

5. Seat (10) as in claim 4, **characterized in that** said clamping member (37) is a pneumatic gripper (38).

6. Seat (10) as in any claim hereinbefore, **characterized in that** said vibration damping unit (13) comprises a cam (33) associated in cooperation with said valve (32) and responsive to the vibrations induced on said base (11) to allow the introduction or extraction of air from said air spring (20).

7. Seat (10) as in any claim hereinbefore, **characterized in that** said valve (32) is provided with two buttons for loading air (47) and discharging air (48), respectively, and said cam (33) is conformed in such a way that a relative movement between cam (33) and valve (32) determines the pressing of one of said buttons (47, 48) or none of them.

8. Seat (10) as in claim 1, **characterized in that** said pneumatic feed unit (15) comprises a collector (17) to which a plurality of distinct and independent flexible tubes (19) are connected, communicating with said air spring (20) and with said pneumatic piston (34), respectively.
